# EUROPEAN PATENT APPLICATION

(11) **EP 3 010 259 A1**
(43) Date of publication of application: **20.04.2016**
(21) Application number: 15189485.4
(22) Date of filing: 13.10.2015
(51) Int. Cl.: H04W 4/08, H04W 4/00

(54) **GROUP EVENT MANAGEMENT METHODS AND SYSTEMS**

(30) Priority: 14.10.2014 TW 103135485
(71) Applicant: Noodoe Corporation, Taipei City 115 (TW)
(72) Inventor: WANG, John C., Taipei City 115 (TW); HOU, Yi-An, Taipei City 115 (TW); HSU, Chih-Feng, Taipei City 115 (TW); YANG, Chieh, Taipei City 115 (TW)
(74) Representative: Karakatsanis, Georgios

(57) **Abstract**

Group event management methods and systems are provided. First, information about a group of wearable electronic devices (122, 124) is provided. Then, an event is received. The event is transmitted to the respective wearable electronic devices (122, 124) in the group via a wireless network (130), wherein the respective wearable electronic device performs a setting operation according to the event, such that the respective wearable electronic device executes the event when a specific condition is met.

## Description

### BACKGROUND

### Technical Field

The disclosure relates generally to group event management methods and systems, and, more particularly to methods and systems that perform an event management process for a group of wearable electronic devices.

### Description of the Related Art

Recently, electronic devices, such as smart phones, tablets, notebooks, or other portable devices, have become more and more technically advanced and multifunctional. For example, portable devices have network connectivity capabilities. Users can use their portable devices to connect to networks at anytime and anywhere. The convenience and new functionalities advanced by modern technology have made these devices into necessities of life.

On the other hand, with the coming of IOT (Internet Of Things) generation, every device or object can connect to networks, and users can access and control these devices or objects via networks. Currently, wearable electronic devices have become the most tangible applications of IOT. In some cases, the wearable device can detect health information of a user, record exercise information and sleep patterns, or display email messages or incoming calls notifications.

Within the population of people with wearable electronic devices, the wearable devices can be organized into groups. Each group may consist of related individual entities. For example, there might be a group consisting of a teacher and several students, a group of a tour guide and several tourists, a group of several bike drivers, or a group of several marathon runners. Each entity may wear a wearable electronic device, and use the wearable electronic device to perform related applications. Since applications for a group will mainly focus on the interactions between group members, the management mechanism corresponding to entities in the group will be relatively important. In some cases, the transmission of events between members in the group will occur frequently. The accuracy and efficiency of event transmission will be the key to success of the related applications.

### Summary

Group event management methods and systems are provided, wherein a management process for events corresponding to a group of wearable electronic devices can be performed by an electronic device.

In an embodiment of a group event management method for use in an electronic device, information about a group of wearable electronic devices is provided. Then, an event is received. The event is transmitted to the respective wearable electronic devices in the group via a wireless network, wherein the respective wearable electronic device performs a setting operation according to the event, such that the respective wearable electronic device executes the event when a specific condition is met.

An embodiment of a group event management system for use in an electronic device comprises a storage unit, a wireless connecting unit, and a processing unit. The storage unit stores information about a group of wearable electronic devices. The processing unit receives an event, and transmits the event to the respective wearable electronic devices in the group via a wireless network. The respective wearable electronic device performs a setting operation according to the event, such that the respective wearable electronic device executes the event when a specific condition is met.

In some embodiments, the event is packed into a data packet, and the data packet is wirelessly broadcasted. In some embodiments, the respective wearable electronic device determines whether the data packet has identification data corresponding to the electronic device. When the data packet has the identification data corresponding to the electronic device, the respective wearable electronic device performs the setting operation according to the event.

In some embodiments, it is determined whether identification data corresponding to a specific electronic device among the wearable electronic devices is received via a wireless network when the specific condition is met. If the identification data corresponding to the specific electronic device is received when the specific condition is met, the execution for the event in the specific electronic device is cancelled.

In some embodiments, a setting completion signal is received from a specific electronic device among the wearable electronic devices via a wireless network, wherein the setting completion signal is generated after the specific electronic device performs the setting operation according to the event.

In some embodiments, it is determined whether all of the setting completion signals corresponding to the respective wearable electronic devices are received. When all of the setting completion signals corresponding to the respective wearable electronic devices are received, a prompting message is generated.

In some embodiments, information corresponding to specific wearable electronic devices, whose setting completion signals are received, is displayed via a user interface.

In some embodiments, the event is a reminding process, and the specific condition comprises a specific time, which is recorded in the event.

In some embodiments, a first wearable electronic device among the wearable electronic devices receives the event via a wireless network, and transmits the event to a second wearable electronic device among the wearable electronic devices via the wireless network.

In some embodiments, the electronic device generates a first data packet and a second data packet according to the event, and broadcasts the first data packet and the second data packet via the wireless network. After the respective wearable electronic device receives the first data packet and the second data packet, the respective wearable electronic device analyzes the first data packet and the second data packet to obtain the event, and performs the setting operation according to the event.

In an embodiment of a group event management method for use in an electronic device, information about a group of wearable electronic devices is provided. Then, an event is received. Identification data corresponding to at least one specific wearable electronic device is detected, and it is determined whether the specific wearable electronic device is one of the wearable electronic devices according to the identification data corresponding to the specific wearable electronic device and the information about the group of the wearable electronic devices. When the specific wearable electronic device is one of the wearable electronic devices, the event is transmitted to the specific wearable electronic device via a wireless network.

An embodiment of a group event management system for use in an electronic device comprises a storage unit, a wireless connecting unit, and a processing unit. The storage stores information about a group of wearable electronic devices. The processing unit receives an event, and detects identification data corresponding to at least one specific wearable electronic device using the wireless connecting unit. The processing unit determines whether the specific wearable electronic device is one of the wearable electronic devices according to the identification data corresponding to the specific wearable electronic device and the information about the group of the wearable electronic devices. When the specific wearable electronic device is one of the wearable electronic devices, the processing unit transmits the event to the specific wearable electronic device via a wireless network.

Group event management methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of a group event management system of the invention;
Fig. 2 is a schematic diagram illustrating another embodiment of a group event management system of the invention;
Fig. 3 is a flowchart of an embodiment of a group event management method of the invention;
Fig. 4 is a flowchart of another embodiment of a group event management method of the invention;
Fig. 5 is a flowchart of an embodiment of a group event management method of the invention;
Fig. 6 is a flowchart of another embodiment of a group event management method of the invention;
Fig. 7 is a schematic diagram illustrating an embodiment of an example of group event management of the invention;
Fig. 8 is a flowchart of another embodiment of a group event management method of the invention;
Fig. 9 is a flowchart of another embodiment of a group event management method of the invention;
Fig. 10 is a flowchart of another embodiment of a group event management method of the invention; and
Fig. 11 is a flowchart of another embodiment of a group event management method of the invention.

### DETAILED DESCRIPTION OF THE INVENTION

Group event management methods and systems are provided.

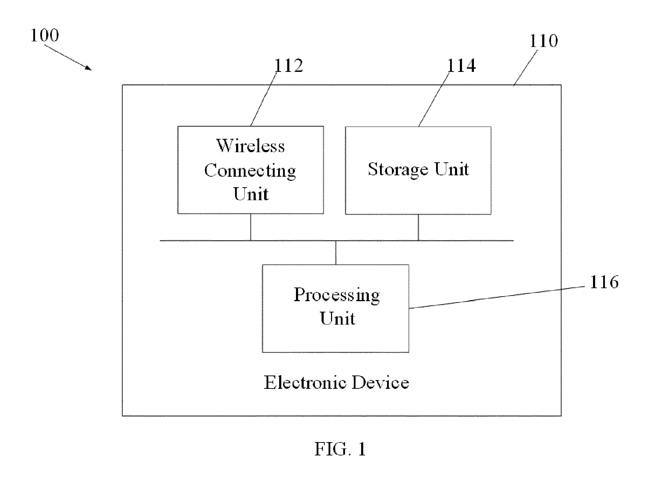

Fig. 1 is a schematic diagram illustrating an embodiment of a group event management system of the invention. The group event management system 100 can be used in an electronic device 110, such as a mobile phone, a smart phone, a PDA (Personal Digital Assistant), a GPS (Global Positioning System), a notebook, a tablet computer, a wearable electronic device, or other portable device. As shown in Fig. 1, the electronic device 110 comprises a wireless connecting unit 112, a storage unit 114, and a processing unit 116. The wireless connecting unit 112 can connect to other electronic devices having wireless connecting capabilities via a wireless network, such as Wi-Fi or Bluetooth network. The storage unit 114 can store related data. The processing unit 116 can control related operations of hardware and software in the electronic device 110, and perform the group event management methods of the invention, which will be discussed in the following paragraphs. It is understood that, in some embodiments, the electronic device 110 can further comprise a display unit (not shown in Fig. 1) for displaying related information, such as images, interfaces, and related data. In some embodiments, the electronic device 110 can further comprise a vibration unit (not shown in Fig. 1) for generating vibrations.

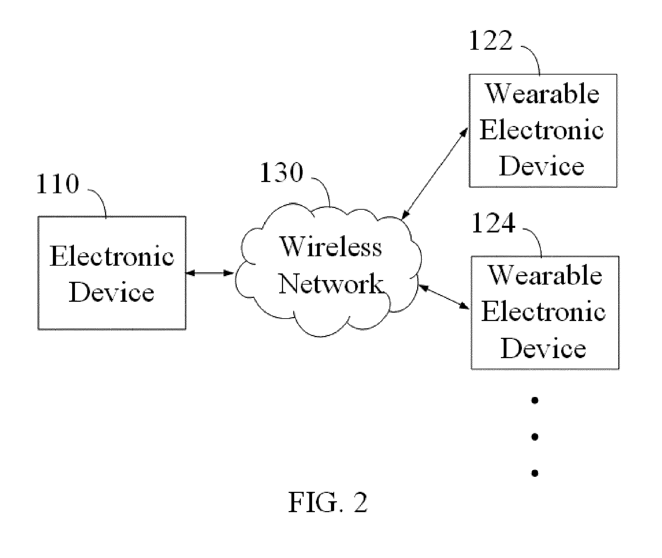

Fig. 2 is a schematic diagram illustrating another embodiment of a group event management system of the invention. The group event management system 100 comprises an electronic device 110 and a plurality of wearable electronic devices (122, 124). In some embodiments, the electronic device 110 may be a portable device, such as a mobile phone, a smart phone, a PDA, a GPS, a notebook, a tablet computer, or a wearable electronic device. In some embodiments, the electronic device 110 and the respective wearable electronic device can have wireless connecting capabilities. In some embodiments, the respective wearable electronic device can connect to the electronic device 110 via a wireless network 130, such as Wi-Fi or Bluetooth network. It is noted that, the wearable electronic device may have components similar to that of the electronic device 110 in Fig. 1.

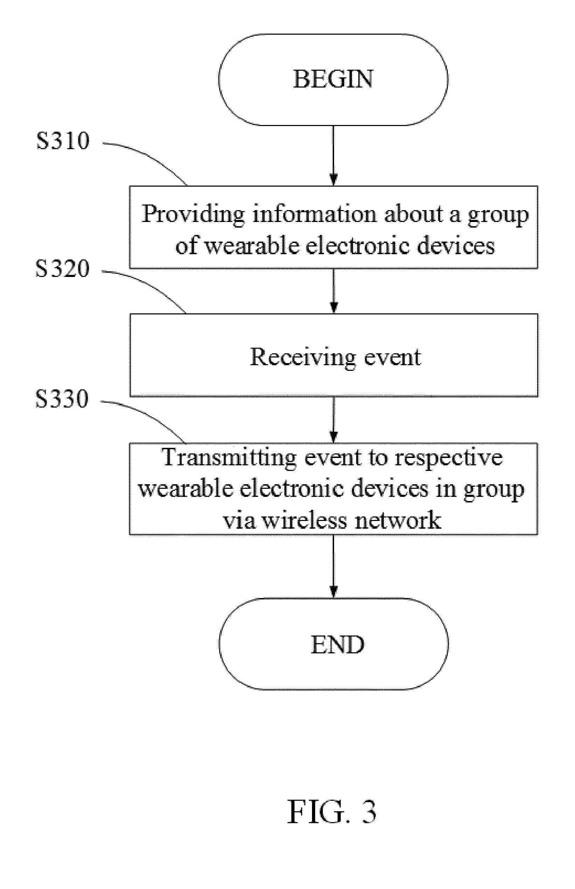

Fig. 3 is a flowchart of an embodiment of a group event management method of the invention. The group event management method can be used in an electronic device, such as the electronic device 110 in Fig. 1.

In step S310, information about a group of wearable electronic devices is provided in the electronic device. It is understood that, in some embodiments, the electronic device can search wearable electronic devices around the electronic device via a wireless network, such as Wi-Fi or Bluetooth network in advance, thus it will know the number of the wearable electronic devices, and identification data corresponding to the respective wearable electronic device. Then, in step S320, an event is received. It is noted that, in some embodiments, the electronic device can provide an interface, such that a user can set the event via the interface. In some embodiments, the event can comprise data having texts, numbers, and/or symbols. In some embodiments, the event may be a reminding process, and comprise a specific condition, such as specific time, and/or related information. Then, in step S330, the event is transmitted to the respective wearable electronic devices in the group via a wireless network. It is understood that, in some embodiments, the event can be packed into a data packet, and the data packet is wirelessly broadcasted. In some embodiments, the data packet can comprise the identification data corresponding to the electronic device. It is noted that, in some embodiments, when the event cannot be packed into a single data packet, the electronic device can generate a first data packet and a second data packet according to the event, and broadcasts the first data packet and the second data packet via the wireless network. It is understood that, the first data packet and the second data packet can respectively record the relationship between the first data packet and the second data packet.

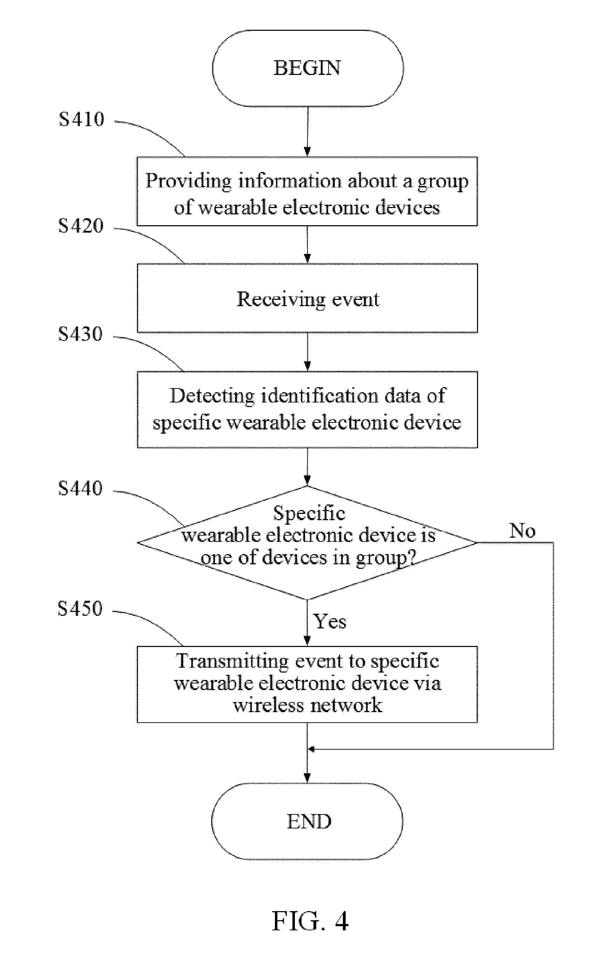

Fig. 4 is a flowchart of another embodiment of a group event management method of the invention. The group event management method can be used in an electronic device, such as the electronic device 110 in Fig. 1.

In step S410, information about a group of wearable electronic devices is provided in the electronic device. It is understood that, in some embodiments, the electronic device can search wearable electronic devices around the electronic device via a wireless network, such as Wi-Fi or Bluetooth network in advance, thus to know the number of the wearable electronic devices, and identification data corresponding to the respective wearable electronic device. Then, in step S420, an event is received. It is noted that, in some embodiments, the electronic device can provide an interface, such that a user can set the event via the interface. In some embodiments, the event can comprise data having texts, numbers, and/or symbols. In some embodiments, the event may be a reminding process, and comprise a specific condition, such as specific time, and/or related information. In step S430, the identification data corresponding to at least one specific wearable electronic device is detected via a wireless connecting unit. In step S440, it is determined whether the specific wearable electronic device is one of the wearable electronic devices in the group according to the identification data corresponding to the specific wearable electronic device and the recorded information about the group of wearable electronic devices. When the specific wearable electronic device is not one of the wearable electronic devices in the group (No in step S440), the procedure is completed. In other words, when the detected specific wearable electronic device is not one of the devices in the group, the electronic device will not transmit the event to the specific wearable electronic device. When the specific wearable electronic device is one of the wearable electronic devices in the group (Yes in step S440), in step S450, the event is transmitted to the specific wearable electronic device via a wireless network.

It is understood that, in some embodiments, when every one of the wearable electronic devices in the group is detected, and the event is transmitted to each of the wearable electronic devices, a notification representing the event has been successfully transmitted to each of the wearable electronic devices is generated. Similarly, in some embodiments, the event can be packed into a data packet, and the data packet is broadcasted wirelessly. In some embodiments, the data packet can comprise the identification data corresponding to the electronic device. It is noted that, in some embodiments, when the event cannot be packed into a single data packet, the electronic device can generate a first data packet and a second data packet according to the event, and broadcasts the first data packet and the second data packet via the wireless network. It is understood that, the first data packet and the second data packet can respectively record the relationship between the first data packet and the second data packet.

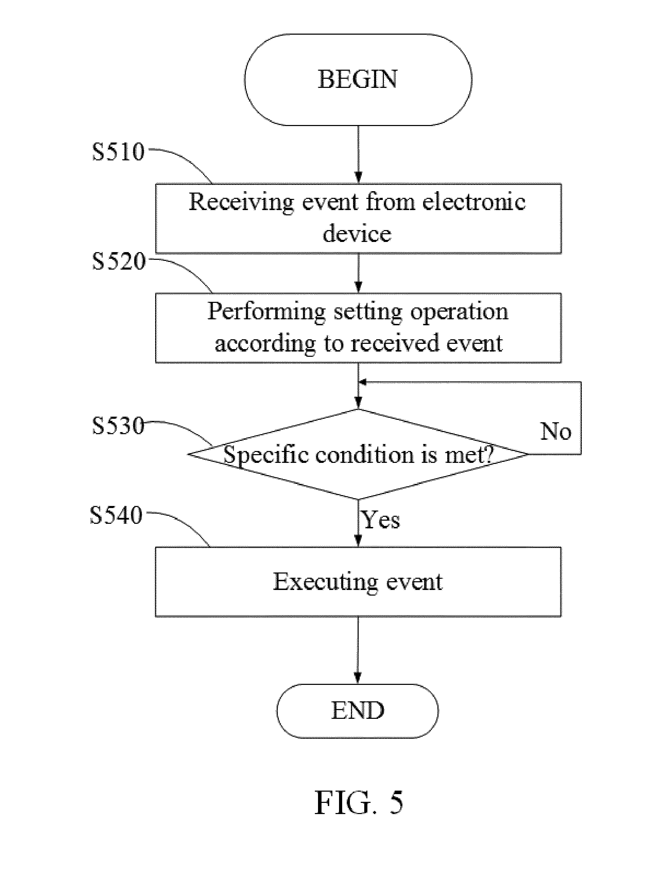

Fig. 5 is a flowchart of an embodiment of a group event management method of the invention. The group event management method can be used in a wearable electronic device, such as the wearable electronic device 122 or 124 in Fig. 2.

In step S510, an event is received from an electronic device via a wireless network, such as Wi-Fi or Bluetooth network, and in step S520, a setting operation is performed according to the received event. In step S530, it is determined whether a specific condition is met. It is understood that, in some embodiments, the specific condition can be recorded in the event. When the specific condition is not met (No in step S530), the procedure remains at step S530. When the specific condition is met (Yes in step S530), in step S540, the wearable electronic device executes the event. It is noted that, in some embodiments, the event may be a reminding process, and the event can comprise the specific condition, such as a specific time, and/or related information. In an example, when the specific time is met, the wearable electronic device generates a vibration, and related information is displayed via a screen. It is understood that, in some embodiments, after the wearable electronic device completes the setting operation corresponding to the event, the wearable electronic device can generate a setting completion signal, and transmit the setting completion signal to the electronic device via a wireless network.

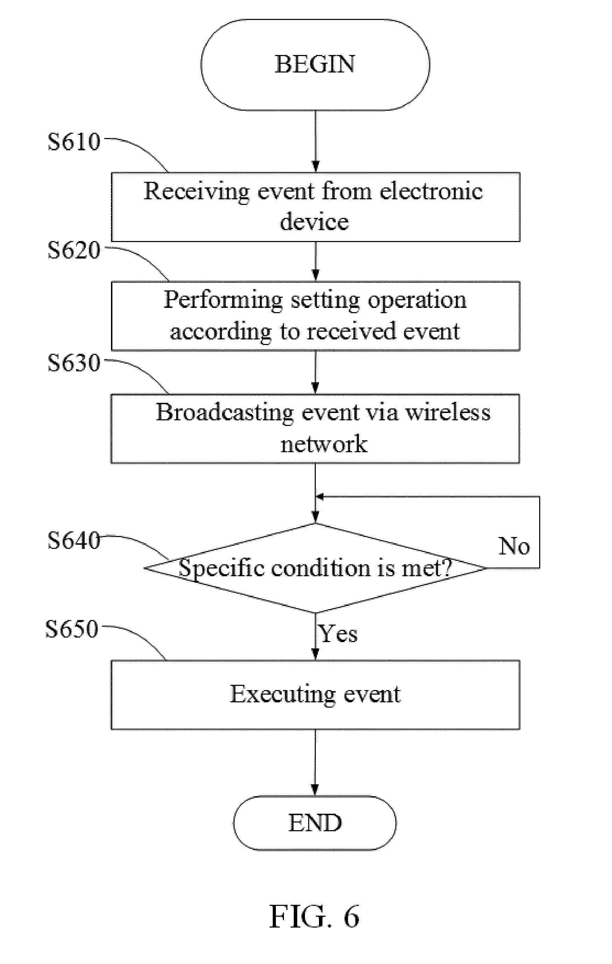

Fig. 6 is a flowchart of another embodiment of a group event management method of the invention. The group event management method can be used in a wearable electronic device, such as the wearable electronic device 122 or 124 in Fig. 2.

In step S610, an event is received from an electronic device via a wireless network, such as Wi-Fi or Bluetooth network, and in step S620, a setting operation is performed according to the received event. In step S630, the received event is broadcasted via a wireless network. In other words, other wearable electronic devices can receive the event transmitted by the electronic device from the specific wearable electronic device. Then, in step S640, it is determined whether a specific condition is met. Similarly, in some embodiments, the specific condition can be recorded in the event. When the specific condition is not met (No in step S640), the procedure remains at step S640. When the specific condition is met (Yes in step S640), in step S650, the wearable electronic device executes the event. In some embodiments, the event may be a reminding process, and the event can comprise the specific condition, such as a specific time, and/or related information. In an example, when the specific time is met, the wearable electronic device generates a vibration, and related information is displayed via a screen. Similarly, in some embodiments, after the wearable electronic device completes the setting operation corresponding to the event, the wearable electronic device can generate a setting completion signal, and transmit the setting completion signal to the electronic device via a wireless network.

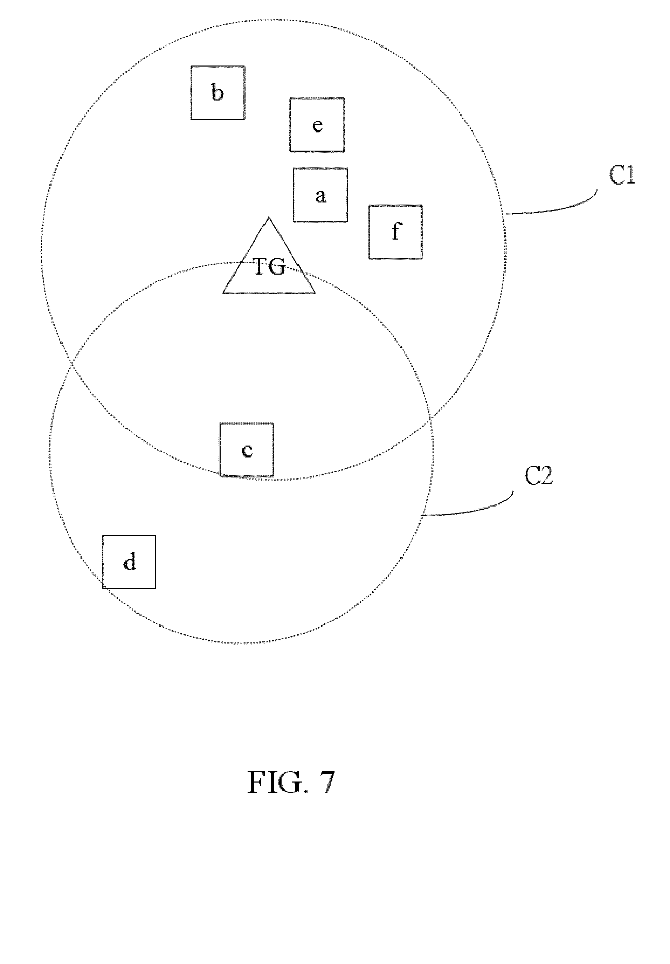

Fig. 7 is a schematic diagram illustrating an embodiment of an example of group event management of the invention. As shown in Fig. 7, an electronic device TG can perform an event management process for a group of wearable electronic devices (a, b, c, d, e, f). The electronic device TG can wirelessly communicate with the wearable electronic devices within the coverage C1. When the electronic device TG has an event, the electronic device TG can wirelessly broadcast the event, and the wearable electronic devices (a, b, c, e, f) within the coverage C1 can receive the event transmitted by the electronic device TG, and perform a setting operation according to the received event. It is noted that, since the wearable electronic device d is not within the coverage C1, the wearable electronic device d cannot receive the event transmitted by the electronic device TG. In the example, after the event is received by the wearable electronic device c, the wearable electronic device c can wirelessly broadcast the received event, wherein the wearable electronic device c can wirelessly communicate with the wearable electronic devices within the coverage C2 which has a center of the position of the wearable electronic device c. Since the wearable electronic device d is within the coverage C2, the wearable electronic device d can receive the event from the wearable electronic device c, and perform a setting operation according to the received event. Consequently, the wearable electronic devices which cannot directly communicate with the electronic device can also receive the event transmitted by the electronic device via other wearable electronic devices.

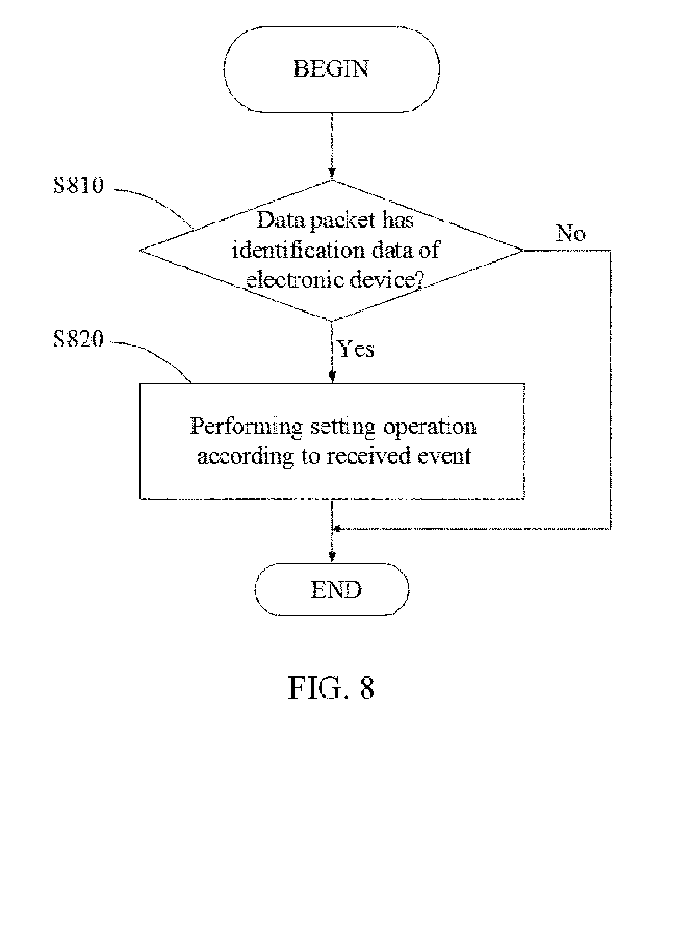

Fig. 8 is a flowchart of another embodiment of a group event management method of the invention. The group event management method can be used in a wearable electronic device, such as the wearable electronic device 122 or 124 in Fig. 2.

In step S810, it is determined whether a received data packet comprises the identification data corresponding to the electronic device. As described, in some embodiments, the event can be packed into a data packet, and the data packet is wirelessly broadcasted. In some embodiments, the data packet can comprise the identification data corresponding to the electronic device. When the data packet does not comprise the identification data corresponding to the electronic device (No in step S810), the procedure is completed. In other words, the data packet is discarded. When the data packet comprises the identification data corresponding to the electronic device (Yes in step S810), in step S820, a setting operation is performed according to the received event. As described, in some embodiments, when the event cannot be packed into a single data packet, the electronic device can generate a first data packet and a second data packet according to the event, and broadcasts the first data packet and the second data packet via the wireless network. After the wearable electronic device receives the first data packet and the second data packet, the wearable electronic device can analyze the first data packet and the second data packet to obtain the event, and perform the setting operation according to the event.

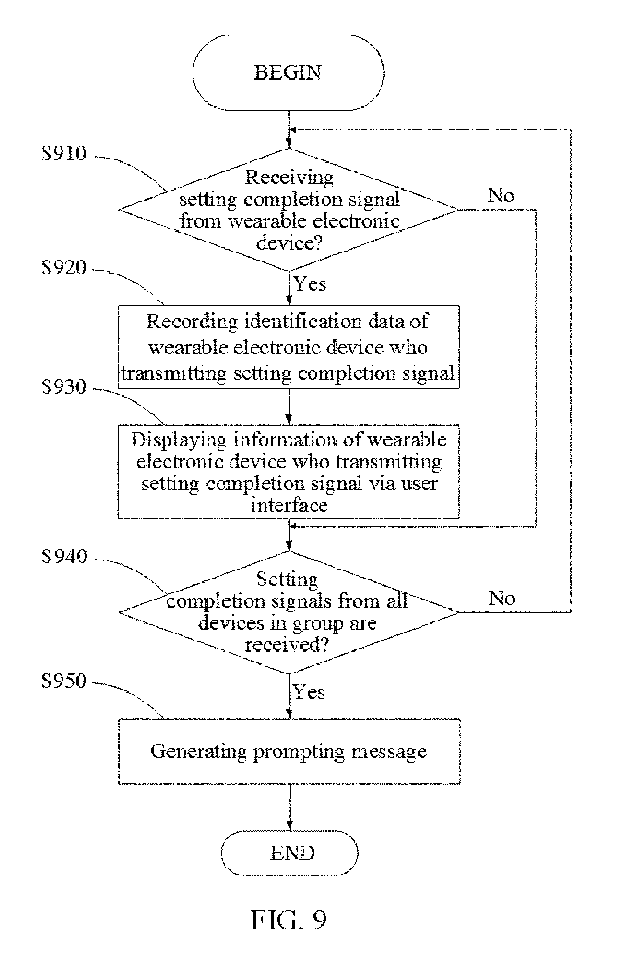

Fig. 9 is a flowchart of another embodiment of a group event management method of the invention. The group event management method can be used in an electronic device, such as the electronic device 110 in Fig. 1.

In step S910, it is determined whether a setting completion signal is received from a wearable electronic device via a wireless network. As described, in some embodiments, after the wearable electronic device completes the setting operation corresponding to the event, the wearable electronic device can generate a setting completion signal, and transmit the setting completion signal to the electronic device via a wireless network. As described, in some embodiments, other wearable electronic devices can receive the event transmitted by the electronic device from a specific wearable electronic device. In some embodiments, the setting completion signals corresponding to other wearable electronic devices can be transmitted to the electronic device via the specific wearable electronic device. When the setting completion signal is not received (No in step S910), the procedure goes to step S940. When the setting completion signal is received from a wearable electronic device (Yes in step S910), in step S920, the identification data corresponding to the wearable electronic device which transmitted the setting completion signal is recorded, and in step S930, related information, such as the name and/or number of at least one wearable electronic device which transmitted the setting completion signal is displayed via a user interface. Then, in step S940, it is determined whether the setting completion signals corresponding to all of the wearable electronic devices in the group are received. It is noted that, since the electronic device will record the information about the wearable electronic devices in the group, the electronic device can accordingly know whether the setting completion signals corresponding to all of the wearable electronic devices in the group are received. When the setting completion signals corresponding to all of the wearable electronic devices in the group are not completely received (No in step S940), the procedure returns to step S910. When the setting completion signals corresponding to all of the wearable electronic devices in the group are completely received (Yes in step S940), in step S950, a prompting message is generated via the electronic device. For example, a message is displayed via a display unit of the electronic device, a vibration is generated by a vibration unit of the electronic device, and/or a sound is generated by a sound output unit of the electronic device. It is noted that, the above manners for generating the prompting message are only examples of the present application, and the present invention is not limited thereto.

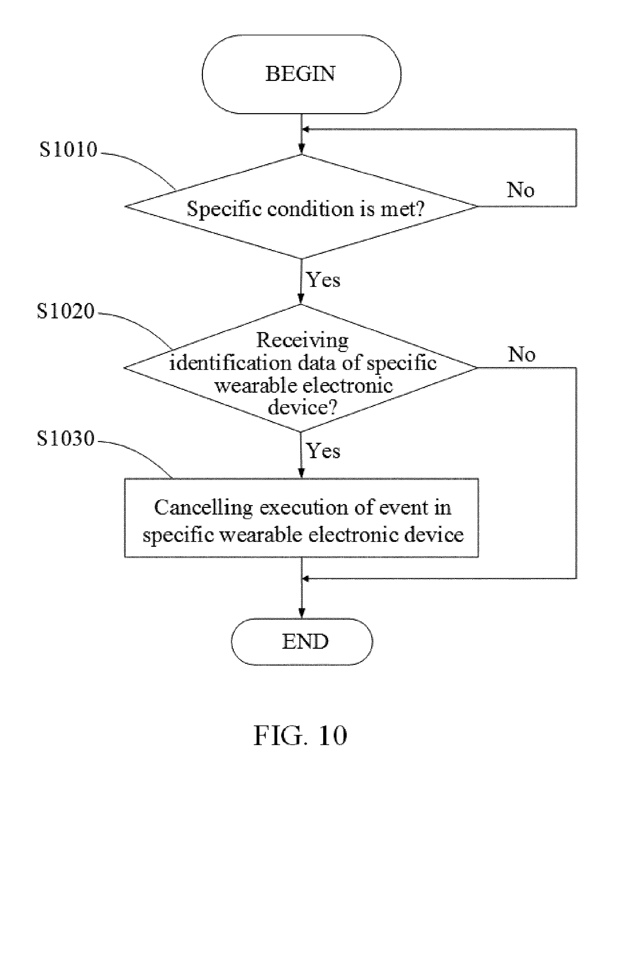

Fig. 10 is a flowchart of another embodiment of a group event management method of the invention. The group event management method can be used in an electronic device, such as the electronic device 110 in Fig. 1.

In step S1010, the electronic device determines whether a specific condition is met. As described, in some embodiments, the event may be a reminding process, and comprise the specific condition, such as a specific time, and/or related information. In other words, the electronic device can determine whether a current time equals to the specific time. When the specific condition is not met (No in step S1010), the procedure remains at step S1010. When the specific condition is met

(Yes in step S1010), in step S1020, it is determined whether the identification data corresponding to a specific wearable electronic device is received via a wireless network. It is noted that, the specific wearable electronic device may wirelessly broadcast its identification data. When the identification data corresponding to the specific wearable electronic device is not received (No in step S1020), the procedure is completed. That is, the specific wearable electronic device will execute the event. For example, when the specific time is met, the wearable electronic device will generate a vibration, and display related information via a screen. When the identification data corresponding to the specific wearable electronic device is received (Yes in step S1020), in step S1030, the execution for the event in the specific wearable electronic device is cancelled. It is understood that, in some embodiments, the electronic device can transmit an event cancellation instruction to the specific wearable electronic device via a wireless network. After the event cancellation instruction is received, the specific wearable electronic device cancels the event.

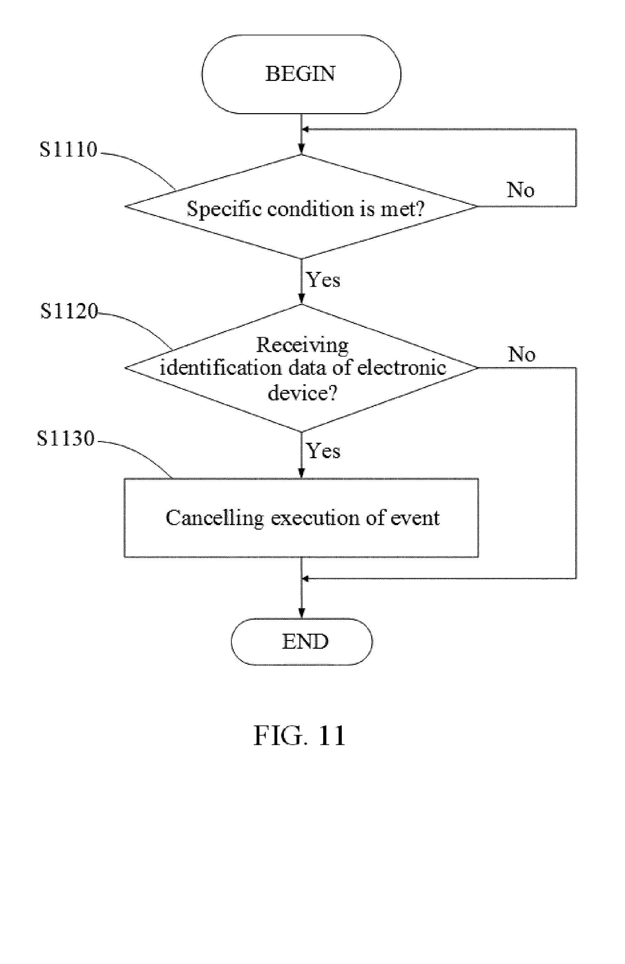

Fig. 11 is a flowchart of another embodiment of a group event management method of the invention. The group event management method can be used in a wearable electronic device, such as the wearable electronic device 122 or 124 in Fig. 2.

In step S1110, the wearable electronic device determines whether a specific condition is met. Similarly, in some embodiments, the event may be a reminding process, and comprise the specific condition, such as a specific time, and/or related information. In other words, the wearable electronic device can determine whether a current time equals to the specific time. When the specific condition is not met (No in step S1110), the procedure remains at step S1110. When the specific condition is met (Yes in step S1110), in step S1120, it is determined whether the identification data corresponding to an electronic device, such as the electronic device 110 in Fig. 1 is received via a wireless network. It is noted that, the electronic device may wirelessly broadcast its identification data. When the identification data corresponding to the electronic device is not received (No in step S1120), the procedure is completed. That is, the specific wearable electronic device will execute the event. For example, when the specific time is met, the wearable electronic device will generate a vibration, and display related information via a screen. When the identification data corresponding to the electronic device is received (Yes in step S1120), in step S1130, the execution for the event in the wearable electronic device is cancelled.

Therefore, the group event management methods and systems of the present invention can perform an event management process for a group of wearable electronic devices, thereby enhancing the accuracy and efficiency of event transmission and management within a group.

Group event management methods may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A group event management method for use in an electronic device, comprising:
providing information about a group of wearable electronic devices (122, 124);
receiving an event; and
transmitting the event to the respective wearable electronic devices (122, 124) in the group via a wireless network (130),
wherein the respective wearable electronic device (122, 124) performs a setting operation according to the event, such that the respective wearable electronic device (122, 124) executes the event when a specific condition is met.

2. The method of claim 1, wherein the event is packed into a data packet, and the data packet is wirelessly broadcasted, and the respective wearable electronic device (122, 124) further determines whether the data packet has identification data corresponding to the electronic device (110), and when the data packet has the identification data corresponding to the electronic device (110), the respective wearable electronic device (122, 124) performs the setting operation according to the event.

3. The method of claim 1 or 2, further comprising:
determining whether identification data corresponding to a specific electronic device among the wearable electronic devices (122, 124) is received via a wireless network (130) when the specific condition is met; and
when the identification data corresponding to the specific electronic device is received when the specific condition is met, cancelling the execution for the event in the specific electronic device.

4. The method of claim 1, 2 or 3, further comprising a step of receiving a setting completion signal from a specific electronic device among the wearable electronic devices (122, 124) via a wireless network (130), wherein the setting completion signal is generated after the specific electronic device performs the setting operation according to the event, determining whether all of the setting completion signals corresponding to the respective wearable electronic devices (122, 124) are received, and generating a prompting message when all of the setting completion signals corresponding to the respective wearable electronic devices (122, 124) are received.

5. The method of claim 4, further comprising a step of displaying information corresponding to the specific wearable electronic device (122, 124), which setting completion signal is received via a user interface.

6. The method of claim 1, 2, 3, 4 or 5, wherein the event is a reminding process, and the specific condition comprises a specific time, which is recorded in the event.

7. The method of claim 1, 2, 3, 4, 5 or 6, wherein a first wearable electronic device among the wearable electronic devices (122, 124) receives the event via a wireless network (130), and transmits the event to a second wearable electronic device among the wearable electronic devices (122, 124) via the wireless network (130).

8. The method of claim 1, 2, 3, 4, 5, 6 or 7, wherein the electronic device generates a first data packet and a second data packet according to the event, and broadcasts the first data packet and the second data packet via the wireless network (130), wherein after the respective wearable electronic device receives the first data packet and the second data packet, the respective wearable electronic device analyzes the first data packet and the second data packet to obtain the event, and performs the setting operation according to the event.

9. A group event management system (100) for use in an electronic device (110), comprising:
a storage unit (114) comprising information about a group of wearable electronic devices (122, 124);
a wireless connecting unit (112); and
a processing unit (116) receiving an event, and transmitting the event to the respective wearable electronic devices in the group via a wireless network (130) using the wireless connecting unit (112),
wherein the respective wearable electronic device performs a setting operation according to the event, such that the respective wearable electronic device executes the event when a specific condition is met.

10. A machine-readable storage medium comprising a computer program, which, when executed, causes a device to perform a group event management method, wherein the method comprises:
providing information about a group of wearable electronic devices (122, 124);
receiving an event; and
transmitting the event to the respective wearable electronic devices in the group via a wireless network (130),
wherein the respective wearable electronic device performs a setting operation according to the event, such that the respective wearable electronic device executes the event when a specific condition is met.
